# EUROPEAN PATENT SPECIFICATION

(11) **EP 2 291 139 B1**
(45) Date of publication and mention of the grant of the patent: **15.02.2012**
(21) Application number: 08790021.3
(22) Date of filing: 26.06.2008
(51) Int. Cl.: A61C 8/00

(54) **DENTAL IMPLANT**
ZAHNIMPLANTAT
IMPLANT DENTAIRE

(43) Date of publication of application: 09.03.2011
(73) Proprietor: Leone S.p.A., 50019 Sesto Fiorentino (Firenze) (IT)
(72) Inventor: DOLFI, Maurizio, I-50143 Firenze (IT); SCOMMEGNA, Gabriele, I-50029 Tavarnuzze Impruneta (FI) (IT)
(74) Representative: Strasser, Wolfgang
(86) International application number: PCT/IT2008/000432
(87) International publication number: WO 2009/157024

(56) References cited:
- EP-A- 0 308 738
- EP-A- 1 554 988
- US-B1- 6 419 492

## Description

The present invention relates to a dental implant. It is known that a dental implant is destined to replace one or more natural teeth to restore both the masticatory function and the aesthetic aspect.

A dental implant generally comprises an artificial root or fixture to be surgically implanted in the bony tissue, and a stump or abutment intended for supporting a dental prosthesis and connected to the fixture. The abutment is connected to the fixture after a preset time allowing the correct execution of an osteo-integration process by which the fixture results afterwards integrated in the bony tissue. The fixture is generally provided with an outer threading to allow it to be screwed into the bony tissue, but it can also be shaped in a different way in order to be inserted by pressure into the implant site.

Dental implants are known in which a Morse-taper coupling is made between the fixture and the abutment: the latter exhibiting a truncated-cone shank to be forced into a corresponding Morse-tapered cavity formed inside the fixture. To prevent the abutment from rotating relative to the fixture, the abutment's shank may be provided with an axial lower appendix having polygonal cross-section. Said lower appendix is to be inserted into a corresponding polygonal seat provided at the bottom of the inner cavity of the fixture. The said appendix makes it also possible to establish a precise positional reference of the abutment with respect to the fixture. Such a dental implant is disclosed in WO 96/26685.

The Morse-taper coupling between the fixture and the abutment is activated by axial impulsive forces exerted on the abutment by means of a suitable tool. To disconnect the two parts it is necessary to apply either an impulsive force, of an intensity equal to that exerted to obtain the taper coupling, or a static tensile force of quite greater intensity. But, since the resistance of the Morse-taper coupling to the torsional loads is decidedly lower, the dentist, in most of the cases, when it is necessary to remove the abutment for intervening on the prosthesis or modifying the therapeutic program, prefers to rotate the abutment which, once released from the Morse-taper coupling, can be easily extracted. However, when the abutment is of a type provided with the above said appendix having polygonal cross-section, the rotational manoeuvre above mentioned is in actual fact prevented, since the appendix in question is inserted into the respective seat, correspondingly shaped with polygonal cross-section, exhibited by the fixture. On the other hand, when the abutment is not provided with an appendix of polygonal cross-section type, there is no accurate reference for the position of the abutment with respect to the fixture during both the preparation of the prosthesis and the fitting tests of the implant on the patient.

EP 1554988 discloses a dental implant, comprising an abutment for connection with a fixture by means of a Morse-taper coupling, with the installation of a truncated-cone shank of the abutment into a corresponding cavity exhibited by the fixture. The abutment is intended to support a dental prosthesis. Furthermore, the abutment has a lower appendix, having polygonal cross-section, which is provided below its shank and is destined to be fitted into a correspondingly shaped seat provided at the bottom of said cavity of the fixture. The polygonal appendix can be rotated about its longitudinal axis, relative to the shank of the abutment, since it features an external threaded portion which can be screwed within a corresponding threaded seat provided by the lower end of the shank.

One object of the present invention is to propose a dental implant able to ease the disconnection of the abutment from the fixture, avoiding the application of impulsive forces and improving the disconnection capabilities of the dental implants provided with a lower rotating polygonal appendix.

A further object of the present invention is to propose a dental implant which allows maintaining a precise positioning of the abutment relative to the fixture.

This result has been achieved, according to the present invention, by adopting the idea of making a dental implant having the characteristics indicated in the claim 1. Further characteristics are the subject of the dependent claims.

The present invention makes it possible to realize a dental implant with self-locking Morse-taper coupling between the abutment's shank and the fixture which, therefore, allows reducing the gap between the coupled surfaces of the abutment and fixture to a minimum, while maintaining or restoring all the time also the correct mutual orientation of these two elements and facilitating the disconnection thereof even after a prolonged period of permanent coupling. Moreover, a dental implant according to the present invention is relatively easy to make and reliable even after a long service period.

These and further advantages and characteristics of the invention will be best understood by anyone skilled in the art from a reading of the following description in conjunction with the attached drawings given as a practical exemplification of the invention, but not to be considered in a limitative sense, wherein:
- Fig. 1A is a schematic side view, in partial longitudinal section, of a fixture for dental implants according to the present invention;
- Fig. 1B is a schematic side view of an abutment for dental implants according to the present invention;
- Fig. 2A schematically shows the positioning of the fixture in the implant site;
- Fig. 2B schematically shows the abutment associated with the fixture within the implant site;
- Fig. 3 is a partially sectioned view of an abutment for a dental implant according to the present invention;
- Fig.4 shows a different embodiment of the coronal portion of the abutment illustrated in Fig.3;
- Fig.5 is a detail of the appendix (22);
- Fig. 6 is a schematic partially sectioned perspective view of the patient's dental arch during the positioning of one abutment and with a second abutment already positioned;
- Figs.7-10 schematically show further operating steps to obtain the proper self-locking of the appendix (22) to the shank of the abutment (2);

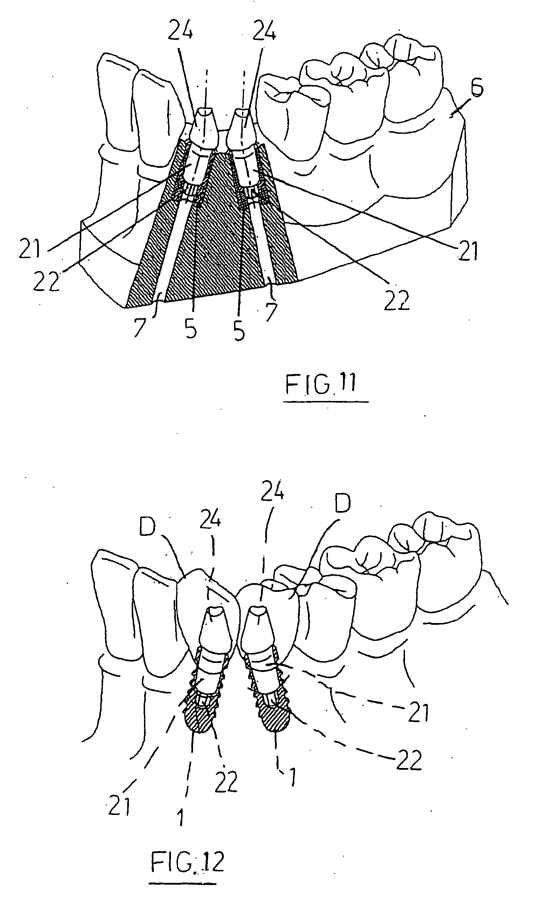

- Fig.11 shows, in a view similar to Fig. 6, the cast with the abutments properly positioned into the respective analogs (5);
- Fig. 12 is a schematic partially sectioned perspective view of a dental arch with an implant made by using a dental implant according to the present invention.

Reduced to its basic structure, and reference being made to the figures of the attached drawings, a dental implant according to the present invention is of the type comprising an artificial root or fixture (1) and an abutment (2).

The fixture (1) is to be implanted in the sub-gingival bony tissue (3) in correspondence of a missing tooth.

According to the example shown in the drawings, the fixture (1) comprises a body featuring an external threading (10), an internal cavity (11) and a seat (12) with polygonal cross-section - for example, hexagonal - provided on the bottom of said cavity (11). The latter has a truncated-cone shape, with the major base (110) up and the minor base (111) down. The half angle (δ) of the cone has a preset value, for example, a nominal value of 1.5°. In other words, the inner lateral wall of the cavity (11) is a Morse-tapered wall.

According to the examples shown in the drawings, the abutment (2) comprises a body with an upper, or coronal, part (24) terminating with a substantially truncated-cone or cylindrical face (20), intended for supporting the dental prosthesis (D), and with a truncated-cone shank (21) provided with an appendix (22) having polygonal cross-section, that is, of a shape corresponding to that of the seat (12) provided on the bottom of the above mentioned inner cavity (11) of the fixture (1). The external surface of the said shank (21) is a Morse-tapered wall like the inner side wall (150) of the said cavity (11).

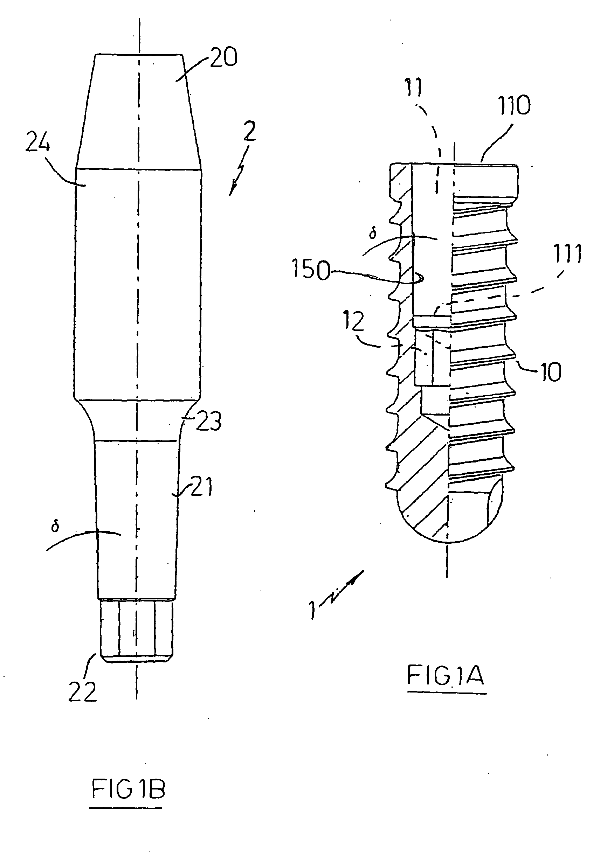

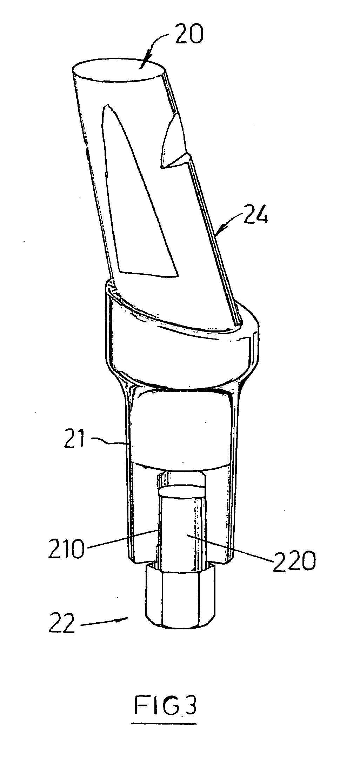

Moreover, the coronal end (24) of the abutment (2) intended to support the prosthesis (D) can be either in line with the shank (21) - such as in the examples of Figs. 1B, 2B and 4 - or also angled or inclined - as in the example of Fig. 3. Following the examples shown in the attached drawings, the truncated-cone shank (21) of the abutment (2) is of a diameter lower than the above-standing portion (20, 24), to which it is connected without interruption by a rounded portion (23) with concave surface, the concavity of said surface facing outwardly.

The said appendix having polygonal cross-section (22) is in apical position, that is, located below the shank (21) of the abutment (2); and the said coronal part (20) is on the opposite side of the appendix (22) with respect to the shank (21), that is, located on the top of the abutment (2).

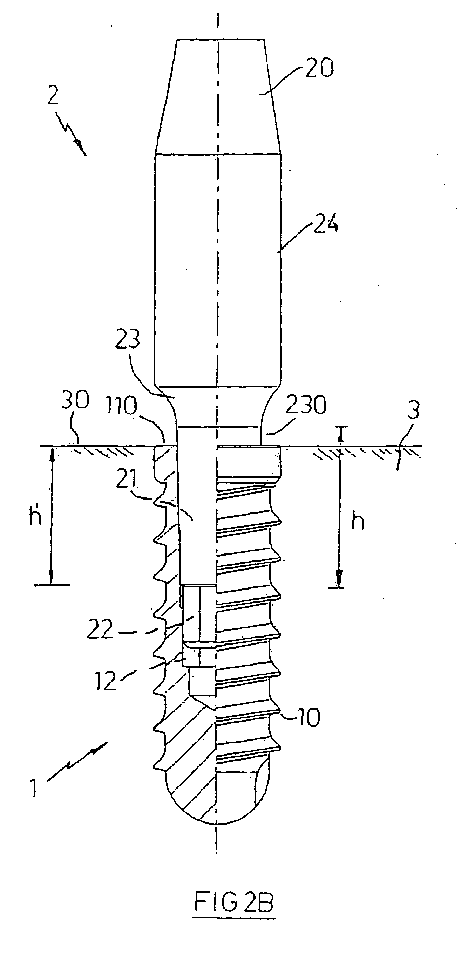

The height (h) of said shank (21) may be chosen of a value greater than the useful height (h') of the cavity (11) formed in the fixture (1), so as to favour, in the condition of Fig. 2B, the growth of the gingival tissue around the section between the upper base (110) of the fixture (1) and the lower part, that is, the part interested by the rounded portion (23)and by the portion (230) of the shank protruding outwardly of the fixture (1) of abutment (2). By the term useful height (h') it is meant the depth of penetration of the shank (21) thereinside. The fixture (1) can be positioned either flush with the crest, that is, with the upper base (110) at the same level as the bony crest (30), or under the crest, that is, more deeply, depending on the choice operated by the doctor.

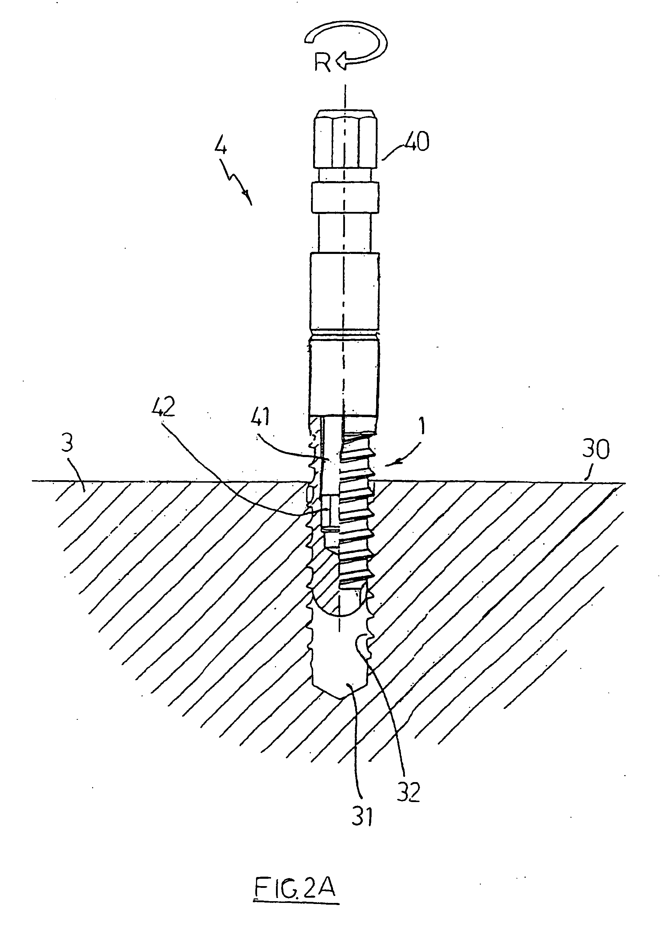

For the positioning of the fixture (1) at the predetermined point, the doctor - after having operated an osteotomy, that is, after having drilled a hole (31) in the bone (3) and, where necessary, formed a female threading (32) on the wall of the same hole, corresponding to the threading (10) of the fixture (1) - can use the tool (4) shown in Fig. 2A. This tool comprises a manoeuvring upper portion (40) and, on the opposite side or below, a cylindrical shank (41) with a terminal appendix (42) having polygonal cross-section, that is, with a shape corresponding to the seat (12) of fixture (1). The diameter of said shank (41) is lower than the minimum diameter of the cavity (11) formed in the fixture (1) (preferably equal to the minimum diameter of such cavity) to allow the positioning of the respective appendix (42) within the seat (12) of fixture (1) without interference between the tool's shank (41) and the inner wall of the cavity (11). To position the fixture (1) at the desired level, the doctor places the portion (42) of tool (4) into the fixture's seat (12) and, by rotating the tool as indicated by the arrow (R) in Fig. 2A, screws the fixture down into the bone (3).

Once the fixture (1) has been positioned at the desired depth within the bony tissue (30), the doctor can fit the abutment (2) therein. To do so, he/she pushes the shank (21) of the abutment (2) into the cavity (11), with the polygonal appendix (22) of the abutment (2) into the seat (12) of the fixture (1). The interference between the walls of said shank (21) and cavity (11) ensures a perfect hermetic seal and maximum stability in the fixture-abutment connection; and the positioning of said appendix (22) within said seat (12) ensures that no relative rotation will occur between the fixture (1) and the abutment (2) after said coupling.

In general, the abutment (2) is intended to be stably coupled with the fixture (1) subsequently to the osteo-integration of the latter.

The said appendix having polygonal cross-section (22) is pivotally engaged to the remaining part (20, 21, 23, 24) of the abutment (2), so that the appendix (22) can rotate about its own longitudinal axis, with respect to the remaining part of the abutment (2) and, in particular, about the shank (21).

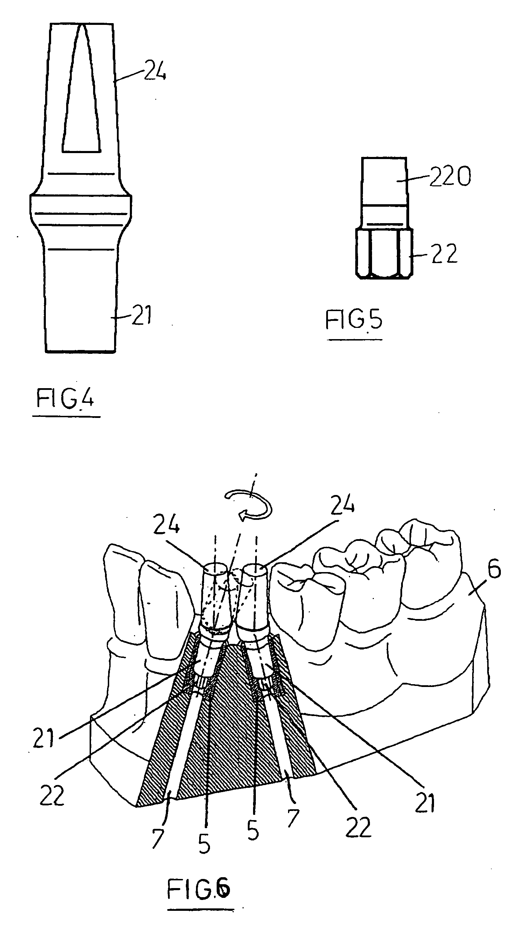

As shown in Fig. 4 and 5, the said appendix (22) features an upper stem (220) whose external wall is a Morse-tapered wall. In other words, said stem (220) has a truncated-cone shape, with the major base down and the minor base up.

The said stem (220) is destined to be fitted into a corresponding Morse-tapered cavity (210) provided inside the shank (21) of the abutment (2).

In other words, the said appendix (22) can be locked to the lower end of the abutment (2), by means of a Morse-taper coupling involving the stem (220) of the appendix (22) and the inner cavity (210) provided by the shank (21) of the abutment (2).

In the assembled condition, the longitudinal axis of said stem (220) coincides with the longitudinal axis of said cavity (210).

The said appendix (22) is not firmly connected to the abutment (2), i.e. to the shank (21) thereof, until an axial impulsive force is applied on the same appendix (22).

A possible use of the dental implant disclosed above is the following.

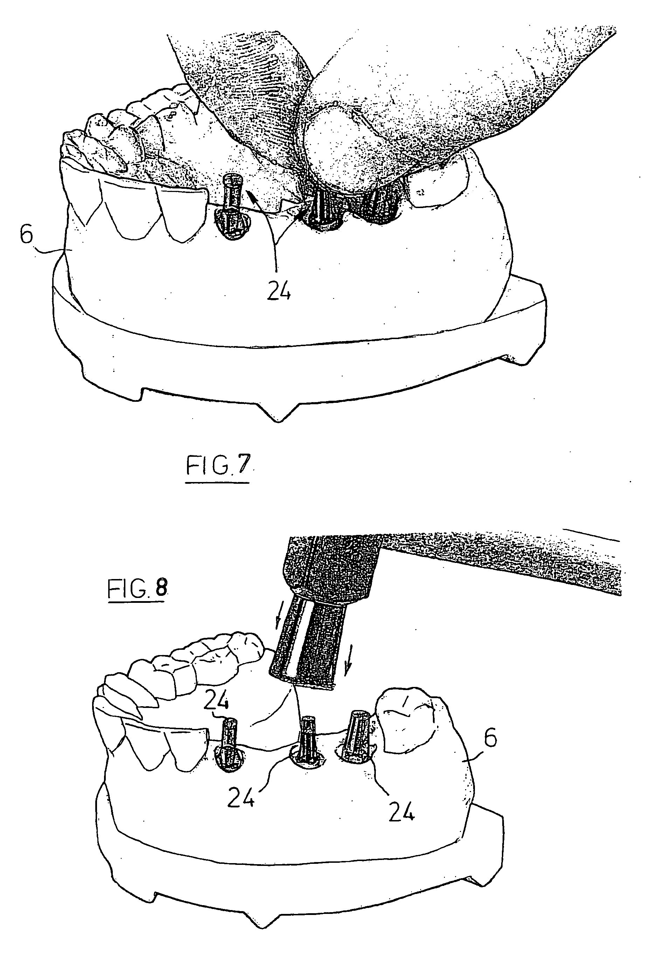

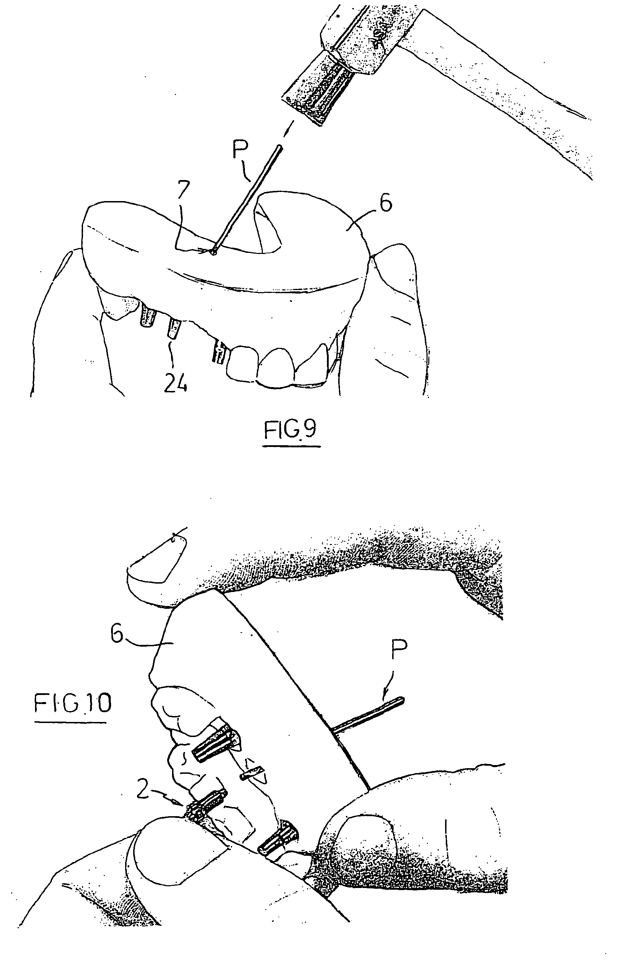

First of all, the appendix (22) is weakly connected to the shank (21) by simply inserting the appendix stem (220) within the inner cavity (210) provided by the shank (21). Since an axial impulsive force is not yet exerted on the appendix (22), the latter is free to rotate about the longitudinal axis of the stem (220), i.e. about the longitudinal axis of the cavity (210). Now, the abutment can be inserted into a similar fixture (5) already disposed in the plaster cast (6) of the patient's dental arch in correspondence of the implant site. The similar fixture (5) is known per se and is also called "analog" in jargon. It reproduces internally the shape of the fixture (1), including the polygonally shaped seat provided at the bottom of its inner cavity, while externally is so shaped as to ensure a suitable retention within the plaster of the cast. The similar fixture (5) can be made of any material more economical than that used for making the real fixture (1), and it is open on its lower side to allow the removal of the abutment (2) - once the latter has been oriented as desired - with the aid of a pin (P) which is introduced into a corresponding hole-channel (7) formed in the same cast (Fig. 6), as further described in the following. The abutment is inserted into the similar fixture (5) by applying a very little pressure so that, when the appendix (22) is inserted into the polygonal seat provided at the bottom of the similar fixture (5), it is still free to rotate about the longitudinal axis of the stem (220). Now, the abutment (2) is randomly oriented but it can be rotated (because the appendix 22 is not yet locked to the shank 21 but is free to rotate as said before) until the best angular position is reached at the doctor's choice (Figs. 6 and 7). Thus, all the abutments (2) can be easily and correctly positioned, i.e. oriented, on the plaster cast (6). Once it is decided that an abutment (2) is properly positioned, an axial impulsive force on the abutment (2) is applied(as shown in Fig. 8) thus determining the self-locking of the abutment (2) with the similar fixture (5). Now, a pin (P) is inserted into the above mentioned channel-hole (7), and an axial impulsive force on the lower side of the appendix (22) is applied, as shown in Fig.9. In this way, the self-locking of the appendix (22) with the shank (21) of the abutment (2) is obtained and, at the same time, it is provided the unseating of the abutment (2) from the similar fixture (5) and the abutment (2) can be manually extracted from the plaster cast (6), as shown in Fig.10. Then, the abutment (2) with the lower appendix (22) thus locked can be positioned into the fixture (1). Should, after having taper-seated the abutment (2) into the fixture (1) already positioned in the patient's bone tissue, be necessary to extract the abutment, it would be sufficient to rotate the latter by simply using a dental clamp. In fact, even if the appendix (22) is fitted within the polygonal seat at the bottom of the fixture (1), the Morse-taper coupling or connection between the appendix (22) and the shank (21) of the abutment (2) can be easily removed by means of said rotation and the abutment (2) can be extracted from the fixture (1). The fixture (1) and the abutment (2) can be made, for example, of a biocompatible material such as titanium of medical grade 5 (UNI 9673, ISO 5832), or of zirconium oxide (ZrO₂) or aluminium-oxide (Al₂O₃).

According to the example shown in Fig.3, the upper part (24) of the abutment (2) is inclined with respect to the shank (21).

Practically, the construction details may vary in any equivalent way as far as the shape, dimensions, elements disposition, nature of the used materials are concerned, without nevertheless departing from the scope of the adopted solution idea and, thereby, remaining within the limits of the protection granted by the claims of the present patent.

## Claims

1. Dental implant, comprising an abutment (2) for connection with a fixture (1) by means of a Morse-taper coupling, with the installation of a truncated-cone shank (21) of the abutment (2) into a corresponding cavity (11) exhibited by the fixture (1), the said abutment (2) being provided with an appendix, having polygonal cross-section (22), which is positioned below said shank (21) and to be fitted into a corresponding seat (12) provided in the bottom of the said cavity (11) of fixture (1), the abutment being also provided, on the side opposite to said appendix (22) with respect to said shank (21), with a portion (20, 24) intended for supporting a dental prosthesis (D), the said appendix (22) can be rotated about its longitudinal axis, relative to the said shank (21) of the abutment (2) **characterized in that** the said appendix (22) features an upper stem (220) whose external wall is Morse-tapered and the said shank (21) is internally provided with a Morse-tapered cavity inside which said stem (220) of the appendix (22) is destined to be fitted.

2. Dental implant according to claim 1 **characterized in that** the said appendix (22) is locked to said Morse-tapered cavity by applying an impulsive force on the appendix (22).

3. Dental implant according to claim 1 **characterized in that** said portion (20, 24) intended for supporting a dental prosthesis (D) is inclined with respect to the said shank (21).

4. Dental implant according to claim 1 **characterized in that** said portion (20, 24) intended for supporting a dental prosthesis (D) is axially aligned with the said shank (21).

## Patentansprüche

1. Zahnimplantat, das einen Ansatz (2) für eine Verbindung mit einer Verankerung (1) mit Hilfe einer Morse-Verjüngungsverbindung durch die Installation eines stumpfkegeligen Schaftes (21) des Ansatzes (2) in einem entsprechenden Hohlraum (11) umfasst, der in der Verankerung (1) vorgesehen ist, wobei der Ansatz (2) einen Fortsatz (22) mit polygonalem Querschnitt aufweist, der sich unterhalb des Schaftes (21) befindet und in einen entsprechenden Sitz (12) eingesetzt werden soll, der im Boden des Hohlraums (11) der Verankerung (1) vorgesehen ist, wobei der Ansatz auch auf der dem Fortsatz (22) bezüglich des Schaftes (21) gegenüberliegenden Seite mit einem Teil (20, 24) versehen ist, der dazu dient, eine Zahnprothese (D) zu tragen, wobei der Fortsatz (22) um seine Längsachse relativ zum Schaft (21) des Ansatzes (2) gedreht werden kann, **dadurch gekennzeichnet, dass** der Fortsatz (22) einen oberen Stiel (220) aufweist, dessen Außenwand eine Morse-Verjüngung aufweist und dass der Schaft (21) in seinem Inneren mit einem eine Morse-Verjüngung aufweisenden Hohlraum versehen ist, in den der Stiel (220) des Fortsatzes (22) eingesetzt werden soll.

2. Zahnimplantat nach Anspruch 1, **dadurch gekennzeichnet, dass** der Fortsatz (22) mit dem eine Morse-Verjüngungen aufweisenden Hohlraum dadurch verriegelt wird, dass eine Impulskraft auf den Fortsatz (22) ausgeübt wird.

3. Zahnimplantat nach Anspruch 1, **dadurch gekennzeichnet, dass** der Teil (20, 24), der dazu bestimmt ist, eine Zahnprothese (D) zu tragen, bezüglich des Schaftes (21) geneigt ist.

4. Zahnimplantat nach Anspruch 1, **dadurch gekennzeichnet, dass** der Teil (20, 24), der dazu dient, eine Zahnprothese (D) zu tragen, axial mit dem Schaft (21) ausgerichtet ist.

## Revendications

1. Implantation dentaire, comprenant un moignon (2) destiné à être relié à une racine artificielle (1) au moyen d'une connexion en forme de cône Morse, avec le positionnement d'une queue tronconique (21) du moignon (2) dans une cavité (11) de la racine (1), ledit moignon (2) étant pourvu d'une appendice à section transversale polygonale (22) laquelle peut être positionnée en dessous ladite queue (21) et elle est destinée à se loger dans un siège correspondant (12) prévu au fond de ladite cavité (11) de la racine artificielle (1), le moignon étant aussi pourvu, du côté opposé de l'appendice (22) par rapport à la queue (21), d'une portion (20, 24) destinée à supporter une prothèse dentale (D), dont ladite appendice (22) peut être tournée autour de son axe longitudinal, par rapport à ladite queue (21) du moignon (2), **caractérisé en ce que** ladite appendice (22) présente une tige supérieure (220) dont la surface externe est en forme de cône Morse et ladite queue (21) est intérieurement pourvue d'une cavité en forme de cône Morse dans laquelle la tige (220) de ladite appendice (22) peut être insérée.

2. Implantation dentaire selon la revendication 1 **caractérisé en ce que** ladite appendice (22) est bloquée à ladite cavité conformée en cône Morse en appliquant une force impulsive sur l'appendice (22).

3. Implantation dentaire selon la revendication 1 **caractérisé en ce que** ladite portion (20, 24) destinée à supporter la prothèse dentale (D) est angulée par rapport à ladite queue (21).

4. Implantation dentaire selon la revendication 1 **caractérisé en ce que** ladite portion (20, 24) destinée à supporter la prothèse dentale (D) est lignée de façon axiale avec ladite queue (21).
